# EUROPEAN PATENT SPECIFICATION

(11) **EP 2 473 560 B1**
(45) Date of publication and mention of the grant of the patent: **17.07.2013**
(21) Application number: 10750219.7
(22) Date of filing: 31.08.2010
(51) Int. Cl.: C08K 5/00, C08K 5/3492, C08K 5/5313, C08K 3/38, C08K 3/40

(54) **FLAME RETARDANT POLYMERS AND ADDITIVE SYSTEM FOR IMPROVED VISCOSITY POLYMERS**
FLAMMHEMMENDE POLYMERE UND ZUSATZSYSTEM FÜR POLYMERE MIT VERBESSERTER VISKOSITÄT
POLYMÈRES RETARDATEURS DE FLAMME ET SYSTÈME D'ADDITIF POUR DES POLYMÈRES À VISCOSITÉ AMÉLIORÉE

(30) Priority: 01.09.2009 US 238758 P; 30.08.2010 US 871190
(43) Date of publication of application: 11.07.2012
(73) Proprietor: The University of Southern Mississippi Research Foundation, Hattiesburg, MS 39406 (US); Chemtura Corporation, Middlebury, CT 06749 (US)
(72) Inventor: SIEBECKER, James, D., West Lafayette IN 47906 (US); FIELDING, William, R., West Lafayette IN 47909 (US); OTAIGBE, Joshua, U., Hattiesburg MS 39402 (US)
(74) Representative: Serravalle, Marco
(86) International application number: PCT/US2010/047220
(87) International publication number: WO 2011/028675

(56) References cited:
- US-A1- 2006 084 734
- US-A1- 2006 167 143
- US-A1- 2007 290 405
- URMAN ET AL: "New phosphate glass/polymer hybrids-Current status and future prospects" PROGRESS IN POLYMER SCIENCE, PERGAMON PRESS, OXFORD, GB LNKD- DOI:10.1016/J.PROGPOLYMSCI.2007.07.006, vol. 32, no. 12, 14 November 2007 (2007-11-14), pages 1462-1498, XP022343960 ISSN: 0079-6700
- RAWAL A ET AL: "Detection of nanometer-scale mixing in phosphate-glass/ polyamide-6 hybrids by<1>H-<31>P NMR" CHEMISTRY OF MATERIALS 20061226 AMERICAN CHEMICAL SOCIETY US, vol. 18, no. 26, 26 December 2006 (2006-12-26), pages 6333-6338, XP002605118 DOI: DOI:10.1021/CM0613410
- QIN Q ET AL: "Unexpected rheological behavior of novel low-Tg tin fluorophosphate glass/poly amide 6 hybrids with enhanced benefits" ANNUAL TECHNICAL CONFERENCE - ANTEC, CONFERENCE PROCEEDINGS - 68TH ANNUAL TECHNICAL CONFERENCE OF THE SOCIETY OF PLASTICS ENGINEERS 2010, ANTEC 2010 2010 SOCIETY OF PLASTICS ENGINEERS USA, vol. 2, 2010, pages 982-986, XP009139938

## Description

This application claims priority from U.S. provisional application No. 61/238,758, filed September 1,2009, the disclosure of which is incorporated by reference.

### FIELD

This invention relates to a flame retardant additive system and to its use in thermoplastic polymers.

### BACKGROUND

Thermoplastic resins possess excellent mechanical properties, moldability, and chemical resistance and have therefore been used in automotive parts, electric/electronic components, mechanical components, and many other applications. In certain applications, it is desirable that thermoplastic resin compositions be flame retardant and meet the UL-94 standard for a high degree of flame retardance. This requirement has promoted research into a variety of methods for imparting flame retardance to thermoplastic resins.

A common method of imparting flame retardance to thermoplastic resin compositions involves incorporating a halogenated organic compound such as polymers or oligomers of tetrabromobisphenol A (TBBPA) and dibromostyrene (DBS) as flame retardants along with various synergists for the flame retardance. However, the use of halogenated flame retardants has certain drawbacks in that these materials tend to decompose or degrade at the temperatures used to mold certain thermoplastic compositions, which degradation products can corrode the barrels of compounding extruders, the surfaces of molding machines, and other equiment halogenated flame retardants come in contact with at elevated temperatures. Additionally such halogenated organic flame retardant polymeric or oligomeric additives may have a tendency to bloom to the surface of the polymer article over time, resulting in a dull surface appearance and unnecessary potential for the material to enter the environment.

Phosphinates have been suggested as an alternative to halogenated organic compound flame retardants. However, the use of phosphinates as flame retardants in thermoplastic polymers docs not always lead to the desired combination of physical properties and flame retardance. In particular, it is known that incorporation of phosphinates in concentrations high enough to impart flame retardance to a thermoplastic polymer can result in undesirable increases in shear viscosity, which can cause difficulties in melt processing operations to make flame retardant articles.

It would be beneficial to have a flame retardant additive system for addition to thermoplastic compositions which avoids the incorporation of halogenated organic additive compounds, yet has suficiently low viscosity characteristics to enhance melt processability when forming flame retardant articles.

U.S. Published Patent Application No. 2003/0167143 discloses a composition which comprises a compatibilized poly(arylene ether)/polyamide blend, an optional electrically conductive filler, a phosphinate, and flame retardant augment selected from the group consisting of melamine polyphosphate, zinc borate, low melting glass, talc, and combinations of two or more of the foregoing flame retardant augments. The flow melting glass of 2006/0167143 has a glass transition temperature of 200°C to 500°C. The application contains no disclosure regarding improving the viscosity of the polymer blend by addition of the low melting glass material, nor does it disclose a low melting glass material containing a combination of phosphorous, tin and fluorine.

U.S. Published Patent Application No. 2008/0248278 discloses a composite sheet material comprising a porous core layer adjacent to a skin layer. The porous core layer comprises a thermoplastic poly(arylene ether) and 20 to 80 wt% fibers based on a total weight of the porous core layer. The poly(arylene ether) core also contains additive comprising a flame retardant, a smoke emission retardant, a flame and smoke emission retardant or a combination of two or more of the foregoing retardants, wherein the additive is free of chlorine and bromine. The thermoplastic material may optipnally comprise a viscosity modifier, such as styrene homopolymer, which when added to the composition can reduce shear viscosity to less than 6000 Pa~s. The skin layer covers at least a portion of a surface of the porous core layer. The application contains no disclosure regarding a low melting glass material containing a combination of phosphorous, tin and fluorine the use of the glass for improving the viscosity of the polymer.

U.S. Published Patent Application Nos. 2006/0020064 and 2006/0287418, incorporated herein by reference in their entireties, disclose flame-retardant polymer molding compositions which comprises a nanoparticulate phosphorous-containing flame retardant additive system which comprises at least one phosphinic salt of the formula (I) and/or diphosphinic salt of the formula (II) and/or their polymers, 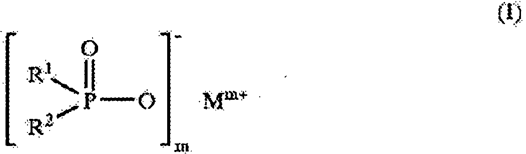 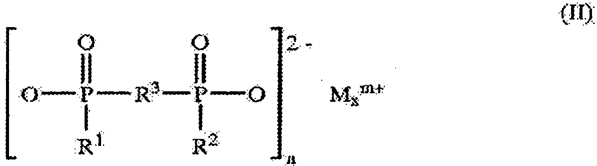 where R¹ and R² are identical or different and are C₁-C₆-alkyl, linear or branched, and/or aryl; R³ is C₁-C₁₀-alkylene, linear or branched, C₆-C₁₀-arylene, - alkylarylene, or -arylalkylene; M is Mg, Ca, Al, Sb, Sn, Ge, Ti, Fe, Zr, Zn, Ce, Bi, Sr, Mn, Li, Na, K, and/or a protonated nitrogen base; m is from 1 to 4; n is from 1 to 4; x is from 1 to 4. While the references suggest inclusion of the phosphinic acid salts to impart flame retardance to polymer compositions, neither reference discloses or suggests inclusion of a low melting glass in the compositions.

U.S. Published Patent Application No. 2007/0290405, incorporated herein by reference in its entirety, discloses the miscibility of inorganic phosphate glass and organic polymer prepared by blending both components in the liquid phase using conventional polymer processing methods. By using certain low Tg phosphate glasses to plasticize nylon, e.g. polyamide 6, a new class of plasticizer is introduced that allows for the creation of unique nylon polymer composites. These materials display tunable morphologies, interesting properties and a readily processable nylon with a substantial reduction of viscosity, Reduced flammability is also possible. The addition of a low Tg phosphate glass in small amounts (less than 10% by volume) to a nylon matrix is said to result in a drastic reduction in viscosity and a decrease in the nylon glass transition temperature, with the capability of adding a low Tg phosphate glass up to 60% by volume. No mention is made of adding phosphinate flame retardants to the nylon/phosphate glass composition.

It has now been found that blending a thermoplastic polymer, such as a polyamide, with both a select low Tg phosphate glass containing phosphorous, tin and fluorine, and a flame retardant additive containing a phosphinate flame retardant can produce a melt processable thermoplastic composition having an advantageous combination of a low shear viscosity and improved flame retardance. In addition, the desired flame retardance can be produced with a smaller concentration of the phosphinate component than is required in the absence or the phosphate glass.

### SUMMARY OF THE INVENTION

The invention provides a flame retardant thermoplastic polymer composition, e.g., a polyolefin, polyester, polyamide or polystyrene composition, comprising: a major amount of the thermoplastic polymer; a flame retardant additive comprising a phosphinic acid salt (i.e., phosphinate), a zinc salt and a melamine salt, in an amount effective to provide flame retardance to said polymer, and a low Tg glass containing phosphorous, tin and fluorine (i.e., tin fluorophosphate glass), Typically, the low Tg glass is present in an amount sufficient to reduce the shear viscosity of the composition to less than about 10 Pa-s at a shear rate of about 1000/sec and a temperature of 280°C, as measured by ASTM D-3835.

Also provided is a process for preparing the flame retardant thermoplastic polymer composition by melt blending a thermoplastic polymer with the above flame retardant additive and low Tg glass.

The tin fluorophosphate glass comprises, for example, SnF₂, SnO and P₂O₅ and has a Tg of less than 200°C, for example, 80°C to 190°C,

The flame retardant additive of the invention typically comprises, along with zinc and melamine salts, at least one phosphinic acid salt of formula (I) and/or a salt of formula (II) and/or their polymers: 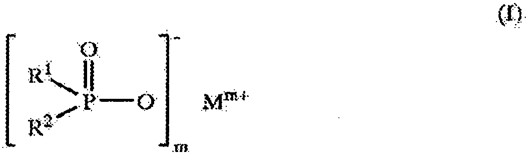 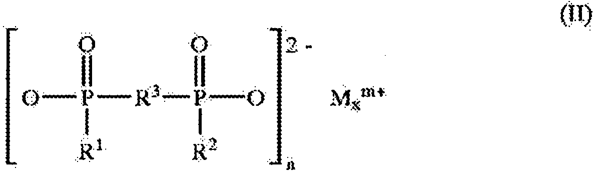 where R¹ and R² are identical or different and are linear or branched alkyl and/or aryl; R³ is a linear or branched alkylene, arylene, -alkylarylene, or -arylalkylene; M is Mg, Ca, Al, Sb, Sn, Ge, Ti, Fe, Zr, Zn, Ce, Bi, Sr, Mn, Li, Na, K, and/or a protonated nitrogen base; m is from 1 to 4; n is from 1 to 4; and x is from 1 to 4.

In many embodiments the thermoplastic polymer of the inventive compositions is selected from the group consisting of polystyrenes, polyolefins, polyesters and polyamides, and frequently comprises a poliyamide, such as one selected from the group consisting of PA-4; PA-6; PA-6,6; PA-6,10; PA-6,9; PA-6,12; PA-4,6; PA-12,12; PA-11; PA-12; an aromatic polyamide; a partially aromatic polyamide; and combinations or blends thereof. In one embodiment the polyamide is PA-6,6.

The flame retardant thermoplastic polymer composition of the invention will meet the flame retardance requirement V-2 of UL-94, will generally meet the flame retardance requirement V-1 of UL-94, and typically will meet the flame retardance requirement V-0 of UL-94.

One embodiment of the invention provides a flame retardant additive combination comprising the phosphinic acid salt above, a zinc salt, a melamine salt and the low Tg glass containing phosphorous, tin and fluorine.

Another embodiment of the present invention is directed to a flame retardant article comprising a polymer composition having a major amount of a thermoplastic polymer; a flame retardant additive comprising a phosphinic acid salt, a zinc salt and a melamine salt, in an amount effective to provide flame retardance to said polymer; and a low Tg tin fluorophosphate glass

Advantageously, the concentration of the low Tg tin fluorophosphate glass incorporated in said polymer composition is sufficient to reduce the concentration of the flame retardant additive necessary to achieve a flame retardance requirement V-0 of UL-94, relative to the concentration of said flame retardant additive necessary to achieve said flame retardance requirement in the absence of said low Tg glass in said composition.

### DETAILED DESCRIPTION OF THE INVENTION

The invention provides a flame retardant thermoplastic polymer composition, comprising:
a major amount of a thermoplastic polymer;
from about 5 wt% to about 25 wt% of a flame retardant additive comprising a phosphinic acid salt, a zinc salt and a melamine salt; and
from about 1 wt% to about 15 wt% of a low Tg glass contaning phosphorous, tin and fluorine,
The polymer composition generally displays a shear viscosity of less than about 10 Pa-s at a temperature of 280°C and a shear rate of about 10,000/sec, often at a shear rate of 1,000/sec, as measured by ASTM D-3835 Also provided is a process for preparing the flame retardant thermoplastic polymer composition.

In the present application, the term "a major amount" when referring to the amount of thermoplastic polymer in the composition means an amount greater than 50 wt%. When referring to the amount of flame retardant additive in the composition, the phrase "in an amount effective to provide flame retardance" means an amount sufficient to reduce the flammability of the overall polymer composition to below an acceptable level for its intended purpose, and should be understood to vary depending upon the particular phosphinic acid salt which is incorporated into the composition. When referring 10 the amount of low Tg glass in the composition, the phrase "in an amount sufficient to reduce the shear viscosity" means an amount which reduces the shear viscosity of the overall molten composition, relative to a similar composition in the absence of the low Tg glass.

Melt processing is a cost advantaged method of making a wide variety of polymerie articles, wherein a thermoplastic polymer is raised close to or above its melting temperature and extruded, cast or molded into a desired shape. Melt processed articles include molded articles, such as electronic housings, automotive parts, electrical connectors, electrical insulation for such as wire, coils and bobbins, extruded, blown or cast films, spunbond or melt-blown fibers, monofilaments, tows, fabrics and the like.

Most, if not all melt processing techniques benefit from using thermoplastic polymers which have relatively low molten viscosities, such that the molten polymer flows well and is easily and consistently transferred into molds, extruders or other such melt processing apparatuses.

The low Tg (glass transition) glasses useful in the present invention are tin fluorophosphate glasses which include tin and fluorine, such as disclosed in U.S. Published Patent Application No. 2007/0290405. The low Tg tin fluorophosphate glass comprises, for example, SnF₂, SnO and P₃O₅, in relative amounts of about about 40 to 60 mole %, typically about 50 mole % SnF₂; about 15 to 25 mole %, typically about 20 mole % SnO; and about 25 to 35, typically about 30 mole % P₂O₅.

Preferably, the tin fluorophosphate glass has a Tg of less than 200°C, for example, 80°C to 190°C, such as 100°C to 190°C, 100°C to 175°C or 110 °C to 150°C. For example, the tin fluorophosphate glass has a Tg of about 120°C to 130°C, i.e., about 125°C.

The low Tg of the tin fluorophosphate glass facilitates its use in melt processing of a wide variety of thermoplastic polymers since the Tg of the tin fluorophosphate glasses is below the melting points of many commercial thermoplastic polymers. For example, polyethylene polymers have melting points in the range of about 120°C to about 130°C; polypropylene has a melting point of about 160°C; and polyamides have melting points in the range of between about 210°C and about 280°C. Thus, the tin fluorophosphate glasses can be readily incorporated into most molten thermoplastic polymer compositions.

The flame retardant thermoplastic polymer composition generally comprises from about 5 wt% to about 25 wt% of the flame retardant additive comprismg phosphinic acid salt, zinc salt and melamine salt; and from about 1 wt% to about 15 wt% of the low Tg glass, for example, from about 1 wt% to abont 10 wt%, typically from about 1 wt% to about 5 wt% of the low Tg glass.

The phosphinic acid salts (aka phosphinates) of the present invention are, for example, these having the formula (I) and/or salts of the formula (II) and/or their polymers: 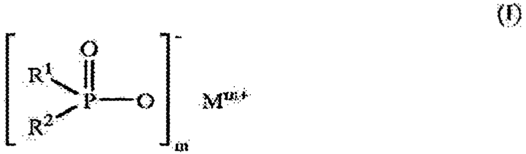 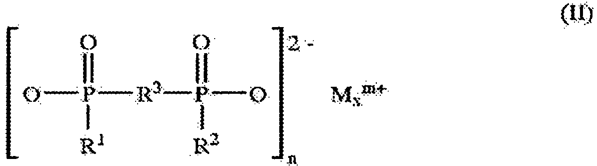 where R¹ and R² are identical or different and are alkyl such as C₁-C₆-linear or branched alkyl, and/or aryl; R³ is C₁-C₁₀-linear or branched alkylene, C₆-C₁₀-arylene, -alkylarylene, or -arylalkylene; M is Mg, Ca, Al, Sb, Sn, Ge, Ti, Fe, Zr, Zn, Ce, Bi, Sr, Mn, Li, Na, K, and/or a protonated nitrogen base; m is 1, 2, 3 or 4 ; n is 1, 2, 3 or 4; and x is 1, 2, 3 or 4, as are disclosed in U.S Published Patent Application Nos. 2006/0020064 and 2006/0287418, both of which are incorporated by reference herein in their entireties.

C₁-C₆-linear or branched alkyl is, for example, methyl, ethyl, propyl, butyl, pentyl, hexyl, iso-propyl, iso-butyl, see-butyl, neopentyl and other branched isomers of the stated number of carbons, for example methyl ethyl or propyl.

In one embodiment M is Ca, Al, Sn, Ti, Zr or Zn. In another embodiment the phosphinic acid salt is of formula (I). In one particular embodiment, the phosphinic acid salts are those of Formula (I), R¹ and R² are each ethyl, M is A1, for example, the phosphinic acid salt of the formula:

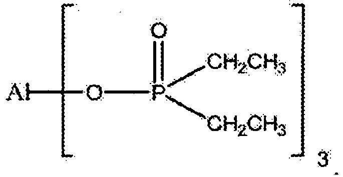

In addition, to the phosphinic acid salt, the flame retardant additive comprises a zinc salt, such as zinc oxide, zinc stannate, zinc hydroxystannate, zinc phosphate, zinc berate, zinc sulfides or combinations thereof; and a melamine salt, such as melamine polyphosphate, melamine phosphate, melamine pyrophosphate, melamine cyanurate or combinations thereof.

The flame retardant additive will generally contain the phosphinic acid salt and metamine salt in larger amounts than the zinc salt. Typically the phosphinic acid salt is present in the largest amount, for example, 50 to 70% of the flame retardant additive will be the phosphinic acid salt. For example, the flame retardant additive may contain from about 40 to 84 wt% of the phosphinic acid salt, from about 15 to 55 wt% of the melamine salt and from about 1 to 15 wt% of the zinc salt. For Example, the flame retardant additive contains from about 50 to 80 wt% of the phosphinic acid salt, from about 19 to 40 wt% of the melamine salt and from about 1 to 10 wt% of the zinc salt.

The criteria for each flammability classification according to UL-94, Vertical Burn Test are as follows,

V-0: In a sample placed so that its long axis is parallel to the flams, the average period of flaming and/or smoldering after removing the ingniting flame should not exceed ten seconds and none of the Vertically placed samples should produce drips of burning particles which ignite absorbent cotton.

V-1: In a sample placed so that its long axis is parallel to the flame, the average period of flaming and/or smoldering after removing the igniting flame should not exceed thirty seconds and none of the vertically placed samples should produce drips fo burning particles which ignite absorbent cotton

V-2: In a sample placed so that its long axis is parallel to the flame, the average period of flaming and/or smoldering after removing the igniting flame should not exceed thirty seconds and the vertically placed samples produce drips of burning particles which ignite cotton.

In order to meet th e most stringent flammability classification, V-0, it is typically necessary to incorporate at least about 18 wt% of a flame retardant additive containing a phosphinic acid salt of Formula (I) or (II), as described above, in a polymer compesition. However, incorporation of high concentrations of phosphinic acid salts sometimes results in undesirable increases in molten polymer viscosities.

Interestingly, it has been found that in many cases, replacement of at least a portion of the flame retardant additive with a tin fluorophosphate glass advantageously decreases molten polymer viscosity while increasing crucial aspects of flame retardance such as char formation. Thus, particular embodiments of the invention provided a polymer composition wherein synergy between the phosphinate/zinc/melamine flame retardant additive and the tin fluorophosphate glass provides improved flame retardancy along with excellent prossessing charactenstics.

For example, thermoplastic polymer compositions, comprising between about 10 wt% to about 20 wt% of a phosphinic acid salt containing flame retardant additive and between about 1 wt% to about 5 wt% of the low Tg tin fluorophosphate glass have been found to exhibit these beneficial properties, e.g., with many of the compositions meeting flame retardance requirement V-0 of UL-94, with shear viscosities of as low as about 10 Pa-s, even as low as about 9 Pa-s at shear rates of about 1000/sec at a temperature of about 280°C. In particular, thermoplastic polyamide compositions comprising about 15 to 18 wt% of the phosphinic acid salt containing flame retardant additive and about 2 to 3 wt% of the low Tg glass have been found to meet flame retardance requirement V-0 of UL-94 with excellent processing and shear viscosity processing.

In contrast, similar polymer compositions having an amount of phosphinic acid salt containing flame retardant additive (about 18 wt%) necessary to meet the flame retardance requirement V-0 of UL-94, in the absence of the tin fluorophosphate glass, have been found to have shear viscosities of about 52 Pa-s at shear rates of about 100/sec at a temperature of about 280°C; more than 5X higher.

While the flame retardant activity of the present compositions is excellent, clear evidence is found that points specifically to a synergistic increase in char formation when the tin fluorophosphate glass of the invention is combined with the phosphinate containing flame retardant. For example, the UL-94 vertical flame test subjects each sample to two 10 second flame applications and measures the time the sample continues to burn after the flame is removed, which is known as "burn time". A second burn time that is shorter than the first burn time is evidence of good char formation.

As shown in the Examples herein, polyamide compositions containing either only the phosphinate containing flame retardant or the tin fluorophosphate glass, with few exceptions, display a longer second burn time compared to the first burn time. One exception is the sample containing 5% phosphinate containing name retardant which displays negligible flame retardancy and burns extensively during the first flame application On the other hand, polyamide compositions containing both the phosphinate containing flame retardant and the tin fluorophosphate glass display a shorter second burn time compared to the first burn time, (the lone exception being a composition containing 15% phosphinate containing flame retardant and 15% tin fluorophosphate glass, which exhihited no burn time at all after the first flame application). Thus, the combination of phosphinate containing flame retardant and the tin fluorophosphate glass not only provides outstanding flame retardaney, but it appears that the combination of the two components quite possibly works, at least in part, via a somewhat different mechanism.

The data also shows that excellent flame retardant results are recorded for compositions containing 18% and 20% of the phosphinate containing flame retardant, as seen for example by the total burn times of the two flame applications combined, while poorer results are recorded from compositions containing only 10% or 5% phosphinate containing flame retardant and compositions containing 5% tin fluorophosphate glass perform in a somewhat similar manner. Total burn times are reproduced in the table below. Thus, the previously cited recommendation of 18% phosphinate containing flame retardant. appear well founded.

On the other hand, flame retardant results equal to or better than those for 18% or 20% of the phosphinate containing flame retardant are obtained for compositions containing 2% tin fluorophosphate glass plus 16% phosphinate containing flame retardant, and compositions containing 5% tin fluorophosphate glass plus 15% phosphinate containing flame retardant. Thus, at the same overall additive concentration, equal or better UL-94 flame retardancy, greater char formation and much better shear viscosity are obtained by using the additive combinations of the present invention.

### Polyamide Compositions

| wt% Phosphinate FR | wt% low Tg Glass | Total Burn Time (see) |
|---|---|---|
| 20 | 0 | 11 |
| 18 | 0 | 24 |
| 10 | 0 | 75 |
| 5 | 5 | >180* |
| 15 | 5 | 11 |
| 16 | 2 | 10 |
| 5 | 5 | 38* |
| 0 | 5 | 109* |
| 0 | 10 | 20* |

| | | |
|---|---|---|
| * burning drips observed | | |

The presence of 10% tin fluorophosphate glass alone in the polyamide composition provided reasonably good burn times, however, there is no evidence of the improved char formation seen with the inventive combinations, first flame time and second flame times are the same, and it must also be noted that burning drips were observed from this composition which were not seen from other highly performing systems. The presence of 20% tin fluorophosphate glass in the polyamide composition provides similar overall results with burning drips observed during the second flame application. However the presence of more than 10% tin fluorophosphate glass is not generally considered ideal for overall processing or cost.

In the process of the invention, a thermoplastic polymer is combined with the above-mentioned phosphinic acid salt containing additive and low Tg tin fluorophosphate glass, in amounts sufficient to impart flame retardancy and low shear viscosity to the overall composition. Combination of the aforementioned components can be accomplished by any known means, such as mixing the dry components prior to melt processing, or by feeding the inorganic Components separately into a heated mixer containing molten polymer for a period of time sufficient to obtain a homogeneous mixture. At this point, the flame retardant polymer composition can be melt processed directly into the desired flame retardant articles, or it can be extruded and cut into pellets for later use.

Thermoplastic polymers suitable for use in the present invention include polyolefins, polyesters, polyamides, styrenic polymers and the like. For example, any of a number of polyamides are suitable for use in the present invention, such as PA-4; PA-6; PA-6,6; PA-6,10; PA-6,9; PA-6,12; PA-4,6; PA-12,12; PA-11; PA-12; an aromatic polyamide; a partially aromatic polyamide; and combinations or blends thereof. In one particular embodiment, the polyamide is PA-6,6.

The invention also provides a flame retardant additive combination comprising a phosphinic acid salt of formula I and or II, a zinc salt, a melamine salt and the low Tg glass containing phosphorous, tin and fluorine as described above. In an advantageous embodiment of the invention, the phosphinic acid salt containing additive and the low Tg glass are present in a weight ratio of flame retardant additive to low Tg glass of from about 10:1 to about 1:1, optionally in combination with a small amount of thermoplastic polymer, to form a flame retardant additive system. For example, the flame retardant additive combination has a weight ratio of the phosphinic acid salt containing additive and the low Tg glass of 10:1 to 5:1, 3:1 to 1:1, 6:1 to 3:1 depending on the polymer system to which the combination will be added. The so-formed flame retardant additive combination can then be packaged and shipped as is to an end user for later combination with a polymer to be melt processed into flame retardant articles. On combination and mixing with the polymer of interest, the concentration of the flame retardant additive system as-shipped is let down to a concentration in the polymer appropriate for obtaining flame retardancy and low shear viscosity.

Particular embodiments of the invention include the following.

A flame retardent additive system for imparting flame retardance to a polymer, comprising a flame retardant additive comprising a phosphinic acid salt, a zinc salt, and a melamine salt, and a low Tg tin fluorophosphate glass comprising SnF₂, SnO and P₂O₅ and having a Tg of from 80°C to 190°C, preferably form 110°C to 150°C, most preferably form 120°C to 130°C,
wherein the weight ratio of said flame retardant additive to said low Tg glass is between 10:1 and 1:1,
the phosphinic acid salt is at least one of a salt of formula (I) and/or a salt of formula (11) and/or their polymers: 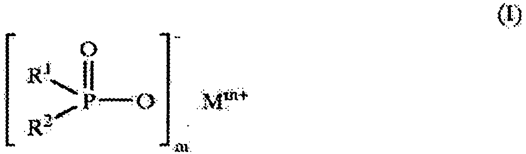 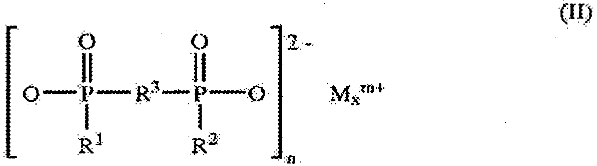 wherein R¹ and R² are identical or different and are C₁-C₆-alkyl, linear or branched, and/or aryl; R³ is C₁-C₁₀-alkylene, linear or branched, C₆-C₁₀-arylene, - alkylarylene, or -arylalkylene, M is Mg, Ca, Al, Sb, Sn, Ge, Ti, Fe, Zr, Zn, Ce, Bi, Sr, Mn, Li, Na, K, and/or a protonated nitrogen base; m is from 1 to 4; n is from 1 to 4; x is from 1 to 4.

For example, the above flame retardant additive system, wherein the tin fluorophosphate glass comprises from 40 to 60 mole % SnF₂, from 15 to 25 mole % SnO and form 25 to 35 mole % P₂O₅ and has a Tg of from 80°C to 190°C tin fluorophosphate glass comprises 50 mole % SnF₂, 20 mole % SnO and 30 mole % P₂O₅.

The phosphinic acid salt is often at least one salt of formula (I), and in one embodiment the phosphinic acid salt is:

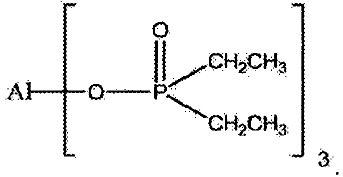

Other particular embodiments provide a process for preparing a flame retardant thermoplastic polymer composition by melt blending a thermoplastic polymer with from 6 to 40 wt%, based on the total weight of the polymer composition, of any of the additive systems described above. In one particular embodiment, the thermoplastic polymer is selected from the group consisting of polystyrenes, polyolefins, polyesters and polyamides, preferably from polyamides.

Particular polymer compositions of the invention include a flame retardant thermoplastic polymer composition, comprising;
a major amount of a thermoplastic polymer;
from 5 wt% to 25 wt%, preferably from 10 to 20 wt% of a flame retardant additive comprising a phosphinic acid salt, a zinc salt and a melamine salt; and from 1 wt% to 10 wt%, preferably from 1 to 5 wt% of a low Tg glass containing phosphorous, tin and fluorine and having a Tg of less than 200°Cp;
for example, the composition may contain 10 to 20 wt% of said flame retardant additive and 2 to 3 wt% of said low Tg glass.

For example, the flame retardant thermoplastic polymer composition wherein the thermoplastic polymer is selected from the group consisting of polystyrenes, polyolefins, polyesters and polyamides;
the phosphinic acid salt is at least one salt of formula (I) and/or formula (II) and/or their polymers: 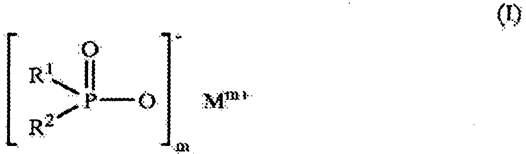 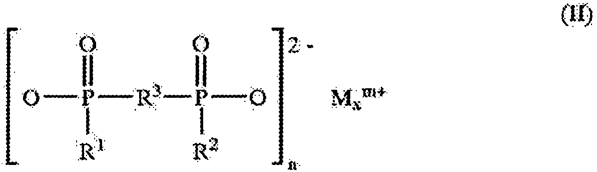 wherein R¹ and R² are identical or different and are C₁-C₆-linear or branched alkyl, and/or aryl; R³ is C₁-C₁₀-linear or branched alkylene, C₆-C₁₀-arylene, alkylarylene, or arylalkylene: M is Mg, Ca, Al, Sb, Sn, Ge, Ti, Fe, Zr, Zn, Ce, Bi, Sr, Mn, Li, Na, K, and/or a protonated nitrogen base; m is from 1 to 4; n is from 1 to 4; x is from 1 to 4; and

the low Tg glass is a tin fluorophosphate glass which comprises SnF₂, SnO and P₂O₅ and has a Tg of from 80°C to 190°C, preferably from 110°C to 150°C, most preferably from 120°C to 130°C.

Often, the phosphinic acid salt in the preceding flame retardant thermoplastic polymer composition is at least one salt of formula (1). Often, the tin fluorophosphate glass in the preceding flame retardant thermoplastic polymer composition comprises from 40 to 60 mole % SnF₂, from 15 to 25 mole % SnO and from 25 to 35 mole % P₂O₅.

The flame retardant additive in any of the above flame retardant thermoplastic polymer compositions contains from 40 to 84 wt%, preferably from 50 to 50 wt% of the phosphinic acid salt, from 15 to 55 wt%, preferably from 19 to 40 wt% of the melamine salt and from 1 to 15 wt%, preferably from 1 to 10 wt% of the zinc salt.

Polyamide, preferebaly a polyamide selected from the group consisting of PA-4; PA-6; PA-6,6; PA-6,10; PA-6,9; PA-6,12; PA-4,6; PA-12,12; PA-11; PA-12; aromatic polyamides and partially aromatic polyamides, most preferably PA-6,6 are conveniently used in the composttions.

For example, in certain flame retardant thermoplastic polymer composition,
the tin fluorophosphate glass comprises from 40 to 60 mole % SnF₂, from 15 to 25 mole % SnO and from 25 to 35 mole % P₂O₅ ;
the flame retardant additive contains from 40 to 84 wt%, preferably from 50 to 50 wt% of the phosphinic acid salt, from 15 to 55 wt%, preferably from 19 to 40 wt% of the melamine salt and from 1 to 15 wt%, preferably from 1 to 10 wt% of the zinc salt; and
the polymer is a polyamide, preferebaly a polyamide selected from the group consisting of PA-4; PA-6; PA-6,6; PA-6,10; PA-6,9; PA-6,12; PA-4,6; -PA-12,12; PA-11; PA-12; aromatic polyamides and partially aromatic polyamides, most preferably PA-6,6.

The flame retardant thermoplastic polymer composition can of course contain other standard additives such as stabilizers, colorants, optical brighteners, filers, processing aids, etc. Reinforcing agents, such as glass fibers, may also be present in the composition, for example, excellent results are obtained with reinforced polyamide compositions comprising 30% of standard glass fibers commonly used in commerce.

The flame retardant thermoplastic polymer composition of the present invention finds use in forming flame retardant articles, such as electronic housings, automotive parts, electrical connectors, electrical insulation for such as wire, coils and bobbins, extruded, blown or cast films, spunbond of melt-blown fibers, monofilaments, tows, fabrics and the like.

### EXAMPLES

In the following examples, the phosphinic acid salt containing flame retardant additive, represented by the abbreviation FRA, is a roughly 60%:36%:4% by weight combination of the phosphinic acid salt: 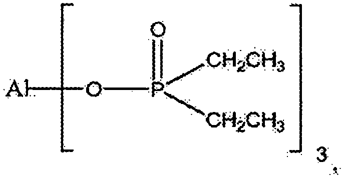 melamine pyrophosphate or equivalent, and zinc borate.

The low Tg fluorophosphate glass, represented by the abbreviation P-Glass, comprises about 50 mole % SnF₂, about 20 mole % SnO, about 30 mole % P₂O₅, and has a Tg of about 125°C.

Thermoplastic samples were prepared by mixing a selected amount of FRA and P-Glass with 60 grams of dried PA-6,6 (Zytel® 101, E.I. du Pont de Nemours and Company, Wilmington, DE) in a Brabender 3-piece 3-zone electric mixer at a rotor speed of 75 rpm and a temperature of 265°C. Samples were then ground and molded into I/16" test bars and screened using the UL-94 vertical burn test protocol. In this protocol, the molded test bar is subjected to two 10 second flame applications, 5 test bars for each formulation are tested. The time for the bar to extinguish after each flame application is noted and reported as Time 1 (T1) and Time 2 (T2) for the bar. The UL-94 Vertical Burn Test protocol classifies materials into four categories from Fail to UL-94 V-0. For screening purposes, the total burn time for T1 and T2 for all five molded test bars were compiled and compared along with the observations of dripping behavior. The PA-6,6 blank was subjected to the same thermal history as the other samples. Results are listed in Table 1

**Table 1**

| Ex. ≠ | P-Glass | FRA | 1^{st} Flame Application | | 2^{nd} Flame Application | | UL-94 Rating |
|---|---|---|---|---|---|---|---|
| | wt% | wt% | Burn Time¹ (sec) | Drips | Burn Time¹ (sec) | Drips | |
| C.E. 1 | 0 | 0 | BTC | BD | | | Fail |
| C.E. 2 | 0 | 5 | 188 | BD | 5 | BD | Fail² |
| C.E. 3 | 0 | 10 | 26 | None | 49 | None | V-O/V-1 |
| C.F. 4 | 0 | 18 | 1 | None | 23 | None | V-0 |
| 1 | 2.5 | 5 | 51 | BC | 8 | BD | V-2 |
| 2 | 5 | 5 | 26 | BD | 12 | BD | V-2 |
| 3 | 5 | 10 | 100 | BC | 17 | BC | V-2 |
| 4 | 5 | 15 | 10 | None | 1 | None | V-0 |
| 5 | 15 | 15 | 0 | None | 7 | None | V-0 |

| | | | | | | | |
|---|---|---|---|---|---|---|---|
| ¹ Total burn time for 5 bars ² Individual bars >30 seconds BTC - burned to clamp; BD - burning drips; BC - burning chunks | | | | | | | |

Capillary rheometry testing according to ASTM D-3835 was performed on the formulations above at three different shear rates: 10,000/s; 1000/s and 100/s, at a temperature of 280°C and a melt time of 360 seconds, X300-40 (0.762 x 30.480 mm) die. Table 2 lists key capillary rheometry results.

**Table 2**

| Ex. ≠ | P- Glass | FRA | Viscosity (Pa-s) | | |
|---|---|---|---|---|---|
| | wt% | wt% | 100 s⁻¹ | 1000 s⁻¹ | 10,000 s⁻¹ |
| C.E.5 | 0 | 0 | 77.4 | 65.4 | 30.3 |
| C.E.6 | 0 | 18 | 55.6 | 52.2 | 31.7 |
| 6 | 5 | 15 | 12.1 | 9 | 7.9 |

The data presented in Tables 1 and 2 illustrates the excellent, flame retardancy and decreased shear viscosity obtained by the addition of the low Tg glass to a reduced amount of the FRA.

Additional formulations were processed into test bars as above and tested using the UL-94 vertical burn test protocol. Results are shown in Table 3.

**Table 3**

| EX | P-Glass | FRA | Total Burn Time for 5 Test Bars | | Total Burn Time |
|---|---|---|---|---|---|
| | wt% | wt% | 1^{st} Flame Application | 2^{nd} Flame Application | 1^{st} FA+ 2^{nd} FA |
| | | | seconds | seconds | seconds |
| C.E.7 | 0 | 20 | 2 | 9 | 11 |
| 7 | 5 | 15 | 10 | 1 | 11 |
| 8 | 10 | 10 | 13 | 5 | 18 |
| C.E.8 | 0 | 18 | 1 | 24 | 25 |
| 9 | 2 | 16 | 6 | 4 | 10 |
| C.E.9 | 10 | 0 | 10 | 10 | 20* |
| C.E.10 | 5 | 0 | 34 | 75 | 109* |
| C.E.11 | 0 | 10 | 26 | 39 | 69 |
| 10 | 5 | 5 | 29 | 8 | 35* |

| | | | | | |
|---|---|---|---|---|---|
| *Due to a buring drip. Based on time criteria alone, each has a V-0 rating. | | | | | |

## Claims

1. A flame retardant thermoplastic polymer composition, comprising:
a major amount of a thermoplastic polymer;
from 5 wt% to 25 wt%, preferably from 10 to 20 wt% of a flame retardant additive comprising a phosphinic acid salt, a zinc salt and a melamine salt; and
from 1 wt% to 10 wt%, preferably from 1 to 5 wt% of a low Tg glass containing phosphorous, tin and fluorine and having a Tg of less than 200°C.

2. The polymer composition of Claim 1, wherein
the thermoplastic polymer is selected from the group consisting of polystyrenes, polyolefins, polyesters and polyamides;
the phosphinic acid salt is at least one salt of formula (I) and/or formula (II) and/or their polymers: 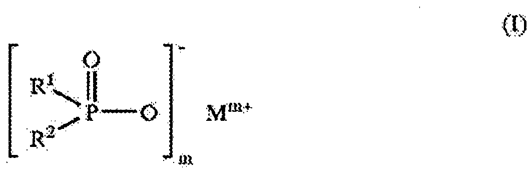 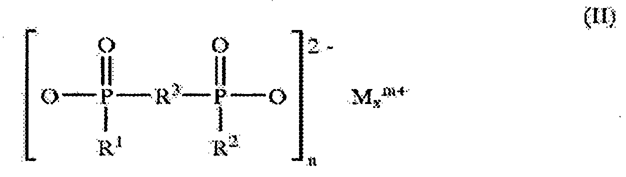 wherein R¹ and R² are identical or different and are C₁₋C₆-linear or branched alkyl, and/or aryl; R³ is C₁-C₁₀-linear or branched alkylene, C₆-C₁₀-arylene, alkylarylene, or arylalkylene; M is Mg, Ca, Al, Sb, Sn, Ge, Ti, Fe, Zr, Zn, Ce, Bi, Sr, Mn, Li, Na, K, and/or a protonated nitrogen base; m is from 1 to 4; n is from 1 to 4; x is from 1 to 4; and
the low Tg glass is a tin fluorophosphate glass which comprises SnF₂, SnO and P₂O₅ and has a Tg of from 80°C to 190°C, preferably from 110°C to 150°C, most preferably from 120°C to 130°C.

3. The polymer composition of claim 2, wherein the phosphinic acid salt is at least one salt of formula (I).

4. The polymer composition of claim 2, wherein the tin fluorophosphate glass comprises from 40 to 60 mole % SnF₂, from 15 to 25 mole % SnO and from 25 to 35 mole % P₂O₅.

5. The polymer composition of claim 2, 3 or 4, wherein the flame retardant additive contains from 40 to 84 wt%, preferably from 50 to 50 wt% of the phosphinic acid salt, from 15 to 55 wt%, preferably from 19 to 40 wt% of the melamine salt and from 1 to 15 wt%, preferably from 1 to 10 wt% of the zinc salt.

6. The polymer composition of claim 2, 3 or 4, wherein the polymer is a polyamide, preferably a polyamide selected from the group consisting of PA-4; PA-6; PA-6,6; PA-6,10; PA-6,9; PA-6,12; PA-4,6; PA-12,12; PA-11; PA-12; aromatic polyamides and partially aromatic polyamides, most preferably PA-6,6.

7. The polymer composition of claim 1, 2, 3 or 4 which comprises 10 to 20 wt% of said flame retardant additive and 2 to 3 wt% of said low Tg glass.

8. The polymer composition of claim 2 or 3, wherein
the tin fluorophosphate glass comprises from 40 to 60 mole % SnF₂, from 15 to 25 mole% SnO and from 25 to 35 mole % P₂O₅;
the flame retardant additive contains from 40 to 84 wt%, preferably from 50 to 50 wt% of the phosphinic acid salt, from 15 to 55 wt%, preferably from 19 to 40 wt% of the melamine salt and from 1 to 15 wt%, preferably from 1 to 10 wt% of the zinc salt; and
the polymer is a polyamide, preferebaly a polyamide selected from the group consisting of PA-4; PA-6; PA-6,6; PA-6, 10; PA-6,9; PA-6,12; PA-4,6: PA-12, 12; PA-11; PA-12; aromatic polyamides and partially aromatic polyamides, most preferably PA-6,6.

9. A flame retardant additive system for imparting flame retardance to a polymer, comprising a flame retardant additive comprising a phosphinic acid salt, a zinc salt and a melamine salt, and a low Tg tin fluorophosphate glass comprising SnF₂, SnO and P₂O₅ and having a Tg of from 80°C to 190°C, preferably from 110°C to 150°C, most preferably from 120° C to 130°C,
wherein the weight ratio of said flame retardant additive to said low Tg glass is between 10:1 and 1: 1,
the phosphinic acid salt is at least one of a salt of formula (I) and/or a salt of formula (II) and/or their polymers: 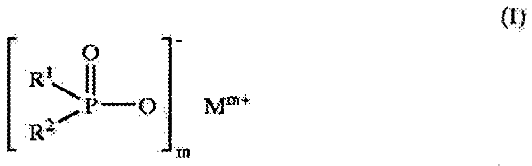 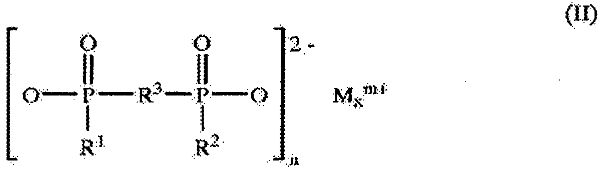 wherein R¹ and R² are identical or different and are C₁-C₆-alkyl, linear or branched, and/or aryl; R³ is C₁-C₁₀-alkylene, linear or branched, C₆-C₁₀-arylene,-alkylarylene, or -arylalkylene; M is Mg, Ca, Al, Sb, Sn, Ge, Ti, Fe, Zr, Zn, Ce, Bi, Sr, Mn, Li, Na, K, and/or a protonated mitrogen base; m is from 1 to 4; n is from 1 to 4; x is from 1 to 4.

10. The flame retardant additive system of claim 9, wherein the tin fluorophosphate glass comprises from 40 to 60 mole % SnF₂, from 15 to 25 mole % SnO and from 25 to 35 mole % P₂O₅.

11. The flame retardant additive system of claim 9, wherein the phosphinic acid salt is at least one salt of formula (I).

12. The flame retardant additive system of claim 9, wherein the phosphinic acid salt is:

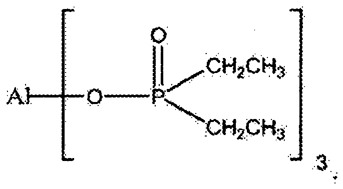

13. A process for preparing a flame retardant thermoplastic polymer composition by melt blending a thermoplastic polymer with from 6 to 40 wt%, based on the total weight of the polymer composition, of the additive system of claim 9.

14. The process of claim 13, wheiren the thermoplastic polymer is selected fromthe group consisting of polystyrenes, polyolefins, polyesters and polyamides, preferably from polyamides.

## Patentansprüche

1. Eine flammhemmende thermoplastische Polymerzusammensetzung, enthaltend:
eine Hauptmenge eines thermoplastischen Polymers;
von 5 Gew.-% bis 25 Gew.-%, vorzugsweise von 10 bis 20 Gew.-% eines flammhemmenden Additivs enthaltend ein Phosphinsäuresalz, ein Zinksalz und ein Melaminsalz; und
von 1 Gew.-% bis 10 Gew.-%, vorzugsweise von 1 bis 5 Gew.-% eines Glases mit niedriger Tg enthaltend Phosphor, Zinn und Fluor und mit einer Tg niedriger als 200°C.

2. Die Polymerzusammensetzung des Anspruchs 1, worin
das thermoplastische Polymer ausgewählt ist aus der Gruppe bestehend aus Polystyrolen, Polyolefinen, Polyestern und Polyamiden;
das Phosphinsäuresalz mindestens ein Salz der Formel (I) und/oder Formel (II) und/oder ihrer Polymere ist: 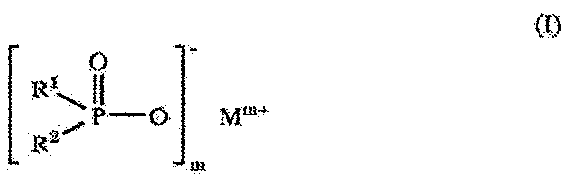 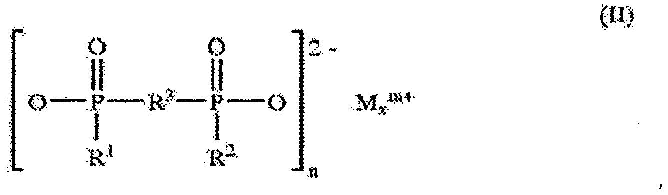 worin R¹ und R² identisch oder verschieden sind und C₁-C₆-lineares oder verzweigtes Alkyl, und/oder Aryl sind; R³ C₁-C₁₀-lineares oder verzweigtes Alkylen, C₆-C₁₀-Arylen, Alkylarylen oder Arylalkylen ist; M Mg, Ca, Al, Sb, Sn, Ge, Ti, Fe, Zr, Zn, Ce, Bi, Sr, Mn, Li, Na, K und/oder eine protonierte Stickstoffbase ist; m von 1 bis 4 beträgt; n von 1 bis 4 beträgt; x von 1 bis 4 beträgt; und
das Glas mit niedriger Tg ein Zinnfluorophosphatglas ist, das SnF₂, SnO und P₂O₅ enthält, und eine Tg von 80°C bis 190°C aufweist, vorzugsweise von 110°C bis 150°C, am bevorzugtesten von 120°C bis 130°C.

3. Die Polymerzusammensetzung des Anspruchs 2, worin das Phosphinsäuresalz mindestens ein Salz der Formel (I) ist.

4. Die Polymerzusammensetzung des Anspruchs 2, worin das Zinnfluorophosphatglas von 40 bis 60 mol% SnF₂, von 15 bis 25 mol% SnO und von 25 bis 35 mol% P₂O₅ enthält.

5. Die Polymerzusammensetzung des Anspruchs 2, 3 oder 4, worin das flammhemmende Additiv von 40 bis 84 Gew.-%, vorzugsweise von 50 bis 50 Gew.-% des Phosphinsäuresalzes, von 15 bis 55 Gew.-%, vorzugsweise von 19 bis 40 Gew.-% des Melaminsalzes und von 1 bis 15 Gew.-%, vorzugsweise von 1 bis 10 Gew.-% des Zinksalzes enthält.

6. Die Polymerzusammensetzung des Anspruchs 2, 3 oder 4, worin das Polymer ein Polyamid ist, vorzugsweise ein Polyamid ausgewählt aus der Gruppe bestehend aus PA-4; PA-6; PA-6,6; PA-6,10; PA-6,9; PA-6,12; PA-4,6; PA-12,12; PA-11; PA-12; aromatischen Polyamiden und teilweise aromatischen Polyamiden, am bevorzugtesten PA-6,6.

7. Die Polymerzusammensetzung des Anspruchs 1, 2, 3 oder 4, die 10 bis 20 Gew.-% besagten flammhemmenden Additivs und 2 bis 3 Gew.-% besagten Glases mit niedriger Tg enthält.

8. Die Polymerzusammensetzung des Anspruchs 2 oder 3, worin
das Zinnfluorophosphatglas von 40 bis 60 mol% SnF₂, von 15 bis 25 mol% SnO und von 25 bis 35 mol% P₂O₅ enthält;
das flammhemmende Additiv von 40 bis 84 Gew.-%, vorzugsweise von 50 bis 50 Gew.-% des Phosphinsäuresalzes, von 15 bis 55 Gew.-%, vorzugsweise von 19 bis 40 Gew.-% des Melaminsalzes und von 1 bis 15 Gew.-%, vorzugsweise von 1 bis 10 Gew.-% des Zinksalzes enthält; und
das Polymer ein Polyamid ist, vorzugsweise ein Polyamid ausgewählt aus der Gruppe bestehend aus PA-4; PA-6; PA-6,6; PA-6,10; PA-6,9; PA-6,12; PA-4,6; PA-12,12; PA-11; PA-12; aromatischen Polyamiden und teilweise aromatischen Polyamiden, am bevorzugtesten PA-6,6.

9. Ein flammhemmendes Additivsystem, um einem Polymer Flammhemmung zu verleihen, enthaltend ein flammhemmendes Additiv enthaltend ein Phosphinsäuresalz, ein Zinksalz und ein Melaminsalz, und ein Zinnfluorophosphatglas mit niedriger Tg enthaltend SnF₂, SnO und P₂O₅ und mit einer Tg von 80°C bis 190°C, vorzugsweise von 110°C bis 150°C, am bevorzugtesten von 120°C bis 130°C,
worin das Gewichtsverhältnis besagten flammhemmenden Additivs zu besagtem Glas niedriger Tg zwischen 10:1 und 1:1 liegt,
das Phosphinsäuresalz mindestens eins eines Salzes der Formel (I) und/oder ein Salz der Formel (II) und/oder ihrer Polymere ist: 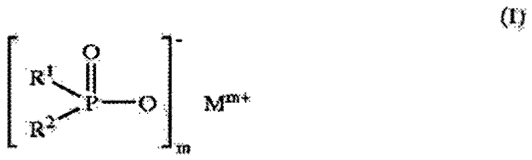 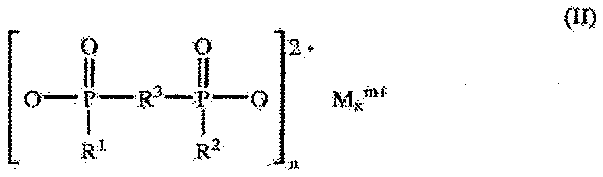 worin R¹ und R² identisch oder verschieden sind und C₁-C₆-Alkyl, linear oder verzweigt, und/oder Aryl sind; R³ C₁-C₁₀-Alkylen, linear oder verzweigt, C₆-C₁₀-Arylen, -Alkylarylen oder -Arylalkylen ist; M Mg, Ca, Al, Sb, Sn, Ge, Ti, Fe, Zr, Zn, Ce, Bi, Sr, Mn, Li, Na, K und/oder eine protonierte Stickstoffbase ist; m von 1 bis 4 beträgt; n von 1 bis 4 beträgt; x von 1 bis 4 beträgt.

10. Das flammhemmende Additivsystem des Anspruchs 9, worin das Zinnfluorophosphatglas von 40 bis 60 mol% SnF₂, von 15 bis 25 mol% SnO und von 25 bis 35 mol% P₂O₅ enthält.

11. Das flammhemmende Additivsystem des Anspruchs 9, worin das Phosphinsäuresalz mindestens ein Salz der Formel (I) ist.

12. Das flammhemmende Additivsystem des Anspruchs 9, worin das Phosphinsäuresalz: 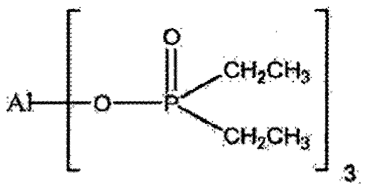 ist.

13. Ein Verfahren zur Herstellung einer flammhemmenden thermoplastischen Polymerzusammensetzung durch Schmelzvermischung eines thermoplastischen Polymers mit von 6 bis 40 Gew.-%, basierend auf dem Gesamtgewicht der Polymerzusammensetzung, des Additivsystems des Anspruchs 9.

14. Das Verfahren des Anspruchs 13, worin das thermoplastische Polymer ausgewählt ist aus der Gruppe bestehend aus Polystyrolen, Polyolefinen, Polyestern und Polyamiden, vorzugsweise aus Polyamiden.

## Revendications

1. Composition de polymère thermoplastique retardatrice de flamme, comprenant :
- une quantité majeure d'un polymère thermoplastique ;
- de 5 % en poids à 25 % en poids, de préférence de 10 à 20 % en poids d'un additif retardateur de flamme comprenant un sel d'acide phosphinique, un sel du zinc et un sel de mélamine ; et
- de 1 % en poids à 10 % en poids, de préférence de 1 à 5 % en poids d'un verre à basse Tg contenant du phosphore, de l'étain et du fluor et ayant une Tg de moins de 200°C.

2. Composition de polymère selon la revendication 1, dans laquelle :
- le polymère thermoplastique est choisi dans le groupe consistant en les polystyrènes, les polyoléfines, les polyesters et les polyamides ;
- le sel d'acide phosphinique est au moins un sel de formule (I) et/ou de formule (II) et/ou leurs polymères : 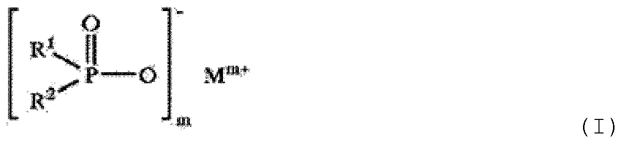 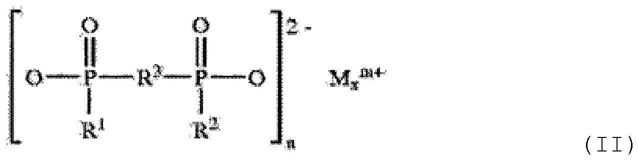 où R¹ et R² sont identiques ou différents et représentent alkyle linéaire ou ramifié en C₁-C₆ et/ou aryle ; R³ représente alkylène linéaire ou ramifié en C₁-C₁₀, arylène en C₆-C₁₀, alkylarylène ou arylalkylène ; M est Mg, Ca, Al, Sb, Sn, Ge, Ti, Fe, Zr, Zn, Ce, Bi, Sr, Mn, Li, Na, K et/ou une base azotée protonée ; m est de 1 à 4 ; n est de 1 à 4 ; x est de 1 à 4 ; et
- le verre à basse Tg est un verre de fluorophosphate d'étain qui comprend SnF₂, SnO et P₂O₅ et a une Tg de 80°C à 190°C, de préférence de 110°C à 150°C, de la façon que l'on préfère le plus de 120°C à 130°C.

3. Composition de polymère selon la revendication 2, dans laquelle le sel d'acide phosphinique est au moins un sel formule (I).

4. Composition de polymère selon la revendication 2, dans laquelle le verre de fluorophosphate d'étain comprend de 40 à 60 % en moles de SnF₂, de 15 à 25 % en moles de SnO et de 25 à 35 % en moles de P₂O₅.

5. Composition de polymère selon l'une des revendications 2, 3 ou 4, dans laquelle l'additif retardateur de flamme contient de 40 à 84 % en poids, de préférence de 50 à 50 % en poids du sel d'acide phosphinique, de 15 à 55 % en poids, de préférence de 19 à 40 % en poids du sel de mélamine et de 1 à 15 % en poids, de préférence de 1 à 10 % en poids du sel de zinc.

6. Composition de polymère selon l'une des revendications 2, 3 ou 4, dans laquelle le polymère est un polyamide, de préférence un polyamide choisi dans le groupe consistant en PA-4 ; PA-6 ; PA-6,6, PA-6,10 ; PA-6,9 ; PA-6,12 ; PA-4,6 ; PA-12,12 ; PA-11 ; PA-12 ; les polyamides aromatiques et les polyamides partiellement aromatiques, de la façon que l'on préfère le plus PA-6,6.

7. Composition de polymère selon l'une des revendications 1, 2, 3 ou 4, qui comprend 10 à 20 % en poids dudit additif retardateur de flamme et de 2 à 3 % en poids dudit verre à basse Tg.

8. Composition de polymère selon l'une des revendications 2 ou 3, dans laquelle :
- le verre de fluorophosphate d'étain comprend de 40 à 60 % en moles de SnF₂, de 15 à 25 % en moles de SnO et de 25 à 35 % en moles de P₂O₅ ;
- l'additif retardateur de flamme contient de 40 à 84 % en poids, de préférence de 50 à 50 % en poids du sel d'acide phosphinique, de 15 à 55 % en poids, de préférence de 19 à 40 % en poids du sel de mélamine et de 1 à 15 % en poids, de préférence de 1 à 10 % en poids du sel de zinc ; et
- le polymère est un polyamide, de préférence un polyamide choisi dans le groupe consistant en PA-4 ; PA-6 ; PA-6,6 ; PA-6,10 ; PA-6-9 ; PA-6,12 ; PA-4,6 ; PA-12,12 ; PA-11 ; PA-12 ; les polyamides aromatiques et les polyamides partiellement aromatiques, de la façon que l'on préfère le plus PA-6,6.

9. Système d'additif retardateur de flamme pour conférer un retard de flamme à un polymère, comprenant un additif retardateur de flamme comprenant un sel d'acide phosphinique, un sel du zinc et un sel de mélamine, et un verre de fluorophosphate d'étain à basse Tg comprenant SnF₂, SnO et P₂O₅ et ayant une Tg de 80°C à 190°C, de préférence de 110°C à 150°C, de la façon que l'on préfère le plus de 120°C à 130°C,
le rapport massique dudit additif retardateur de flamme audit verre à basse Tg étant entre 10:1 et 1:1,
le sel d'acide phosphinique étant au moins l'un d'un sel de formule (I) et/ou d'un sel de formule (II) et/ou leurs polymères : 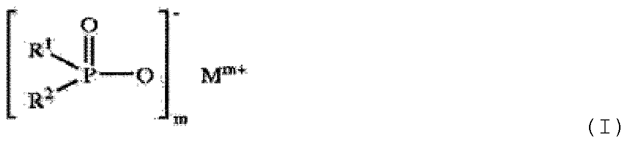 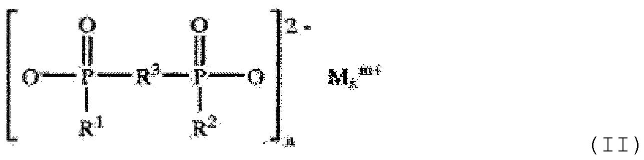 où R¹ et R² sont identiques ou différents et représentent alkyle en C₁-C₆, linéaire ou ramifié, et/ou aryle ; R³ représente alkylène en C₁-C₁₀, linéaire ou ramifié, arylène en C₆-C₁₀, -alkylarylène, ou -arylalkylène ; M est Mg, Ca, Al, Sb, Sn, Ge, Ti, Fe, Zr, Zn, Ce, Bi, Sr, Mn, Li, Na, K et/ou une base azotée protonée ; m est de 1 à 4 ; n est de 1 à 4 ; x est de 1 à 4.

10. Système d'additif retardateur de flamme selon la revendication 9, dans lequel le verre de fluorophosphate d'étain comprend de 40 à 60 % en moles de SnF₂, de 15 à 25 % en moles de SnO et de 25 à 35 % en moles de P₂O₅.

11. Système d'additif retardateur de flamme selon la revendication 9, dans lequel le sel d'acide phosphinique est au moins un sel de formule (I).

12. Système d'additif retardateur de flamme selon la revendication 9, dans lequel le sel d'acide phosphinique est :

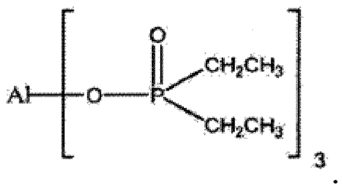

13. Procédé de préparation d'une composition de polymère thermoplastique retardatrice de flamme par mélange à l'état fondu d'un polymère thermoplastique avec de 6 à 40 % en poids, sur la base du poids total de la composition de polymère, du système d'additif selon la revendication 9

14. Procédé selon la revendication 13, dans lequel le polymère thermoplastique est choisi dans le groupe consistant en les polystyrènes, les polyoléfines, les polyesters et les polyamides, de préférence parmi les polyamides.
